# EUROPEAN PATENT APPLICATION

(11) **EP 4 826 455 A1**
(43) Date of publication of application: **21.10.2026**
(21) Application number: 26171136.0
(22) Date of filing: 08.04.2026
(51) Int. Cl.: G03G 15/00, G03G 15/01

(54) **IMAGE FORMING APPARATUS**

(30) Priority: 14.04.2025 JP 2025066531
(71) Applicant: KYOCERA Document Solutions Inc., Osaka-shi, Osaka 540-8585 (JP)
(72) Inventor: SAKAMOTO, Yasuaki, Osaka-shi, Osaka, 540-8585 (JP); MATSUMOTO, Makoto, Osaka-shi, Osaka, 540-8585 (JP); WATANABE, Masaru, Osaka-shi, Osaka, 540-8585 (JP); MORIKAMI, Ayato, Osaka-shi, Osaka, 540-8585 (JP); KOTANI, Yukiko, Osaka-shi, Osaka, 540-8585 (JP)
(74) Representative: Herrero & Asociados, S.L.

(57) **Abstract**

A calibration controller (93) causes an image forming device (12) to form a patch image for calibration and acquires a density of the patch image from a density detector (136) when a predetermined condition is satisfied at an execution timing time-point of calibration during execution of a print job. The calibration controller (93) performs calibration to adjust a process setting when the image forming device (12) forms a toner image on an image carrier (131), using the acquired density of the patch image when the counted number of sheets of a number-of-sheets-continuously-printed counter is less than a predetermined number of sheets, and performs graded calibration to perform gradation correction when the counted number of sheets is equal to or greater than the predetermined number of sheets.

## Description

### BACKGROUND

The present invention relates to an image forming apparatus having a calibration function for color adjustment.

In an image forming apparatus such as a printer or a multifunction peripheral, to maintain image quality, calibration for color adjustment is performed. In the calibration, the image forming apparatus is caused to form a predetermined image patch, and density correction, gradation correction, or the like is performed on the basis of a density or the like of the image patch. In Patent Document 1, a method in which an image patch is formed in an end portion of a printing region simultaneously with printing, and when a density of the image patch exceeds an allowable range, an image patch with a different gradation is formed to perform density correction is described.

### SUMMARY

As one aspect of the present invention, a technique improved over the above-described technique is proposed.

An image forming apparatus in the present invention includes an image forming device, a number-of-sheets-continuously-printed counter, a density detector, and a calibration controller. The image forming device has an image carrier, a charging device, an exposure device, a developing device, a primary transfer device, and a secondary transfer device. The charging device is configured to charge the image carrier. The exposure device is configured to expose the charged image carrier on the basis of image data to form an electrostatic latent image. The developing device is configured to supply toner to the exposed image carrier to form a toner image. The primary transfer device is configured to transfer the toner image from the image carrier to a surface of an intermediate transfer belt. The secondary transfer device is configured to secondarily transfer, to a sheet, the toner image primarily transferred to the surface of the intermediate transfer belt. The image forming device is configured to print an image on the sheet according to a print job. The number-of-sheets-continuously-printed counter is configured to count the number of sheets continuously printed by the image forming device. The density detector is configured to measure a density of the toner image primarily transferred to the intermediate transfer belt. The calibration controller is configured to execute calibration. The calibration controller is configured to cause the image forming device to form a patch image for the calibration and acquire a density of the patch image from the density detector when a predetermined condition is satisfied at an execution timing time-point of the calibration during execution of the print job. The calibration controller is configured to perform calibration to adjust a process setting when the image forming device forms the toner image on the image carrier, using the acquired density of the patch image when the counted number of sheets of the number-of-sheets-continuously-printed counter is less than a predetermined number of sheets. The calibration controller is configured to perform graded calibration to perform gradation correction when the counted number of sheets is equal to or greater than the predetermined number of sheets.

### BRIEF DESCRIPTION OF THE DRAWINGS

FIG. 1 is a front cross-sectional view showing a structure of an image forming apparatus.
FIG. 2 is a diagram simply showing disposition of a density sensor.
FIG. 3 is a functional block diagram showing a main internal configuration of the image forming apparatus.
FIG. 4 is a flowchart illustrating printing processing of the image forming apparatus.
FIG. 5 is a diagram showing an example of patch images that are formed when normal calibration is executed.
FIG. 6 is a graph showing a relationship between the number of sheets continuously printed and a density fluctuation.
FIG. 7 is a diagram showing an example of forming positions of patch images when graded calibration is executed.
FIG. 8 is a diagram showing an example of forming positions of patch images when graded calibration is executed.
FIG. 9 is a diagram showing an example of forming positions of patch images when graded calibration is executed.
FIG. 10 is a diagram showing an example of forming positions of patch images when graded calibration is executed.

### DETAILED DESCRIPTION

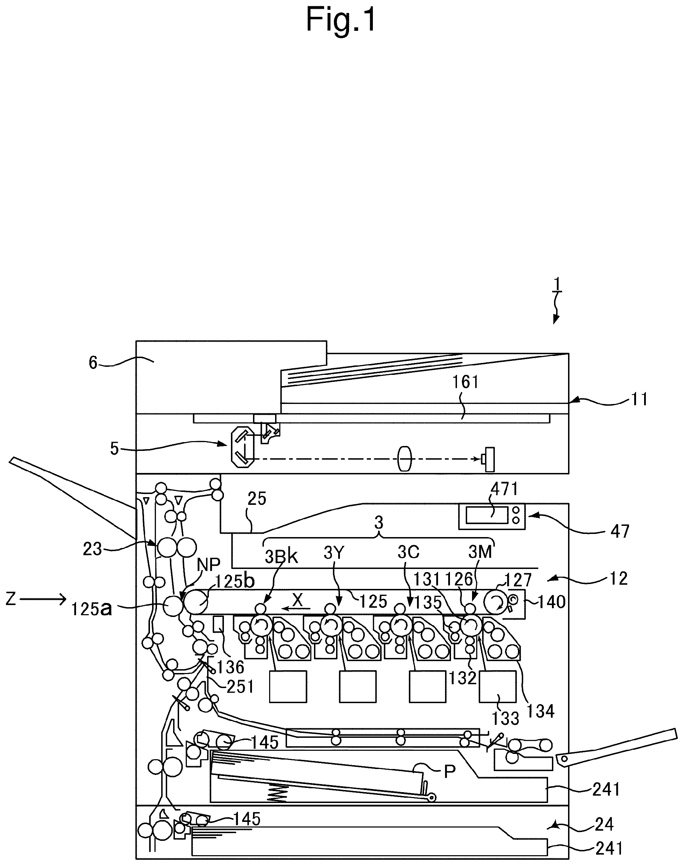

Hereinafter, an image forming apparatus according to an embodiment of the present invention will be described with reference to the drawings. FIG. 1 is a front cross-sectional view showing a structure of an image forming apparatus 1 according to an embodiment of the present invention. The image forming apparatus 1 according to the embodiment of the present invention is, for example, an image forming apparatus such as a multifunction peripheral, a copy machine, a printer, or a facsimile having a plurality of functions such as a copy function, a printer function, a scanner function, and a facsimile function. In the present embodiment, while a color image forming apparatus 1 will be described as an example, an image forming apparatus for monochrome printing may be employed.

The image forming apparatus 1 includes, in an apparatus main body 11, an input receiver 47, an image forming device 12, a fixing device 23, a sheet feeding device 24, a document feeding device 6, an image reading device 5, and the like.

When the image forming apparatus 1 performs a document reading operation, the image reading device 5 optically reads an image of a document fed by the document feeding device 6 or a document placed on a document platen glass 161 and generates image data. The image data generated by the image reading device 5 is stored in a storage device 13 described below or the like.

In the apparatus main body 11, a sheet transport path 251 extending in an up-down direction is formed at a left position with respect to the image forming device 12. In the sheet transport path 251, transport roller pairs are formed at appropriate places. The sheet transport path 251 is formed such that a sheet P is transported from the sheet feeding device 24 to a discharge tray 25 by the transport roller pairs, and the sheet P being transported passes through a transfer portion (nip portion NP) of the image forming device 12 or the fixing device 23.

The sheet feeding device 24 includes a plurality of sheet feeding cassettes 241. The sheet feeding cassettes 241 store the sheets P that are to be transported to the image forming device 12. A controller 91 described below rotationally drives pick-up rollers 145 of the sheet feeding cassettes 241 to transport the sheet P stored in each sheet feeding cassette 241 toward the image forming device 12.

The image forming device 12 forms an image such as a color image on the sheet P fed from the sheet feeding device 24 through predetermined image processing. The image forming device 12 includes a plurality of image forming units 3 (image forming unit 3M for magenta, image forming unit 3C for cyan, image forming unit 3Y for yellow, and image forming unit 3Bk for black), an intermediate transfer belt 125, a primary transfer roller 126, and a secondary transfer roller 125a.

In the present embodiment, the image forming units 3 include the image forming unit 3M for magenta, the image forming unit 3C for cyan, the image forming unit 3Y for yellow, and the image forming unit 3Bk for black sequentially arranged from an upstream side to a downstream side (an arrow X direction of FIG. 1) in a rotation direction of the intermediate transfer belt 125. Each image forming unit 3 includes a photosensitive drum 131 serving as an image carrier, forms a toner image corresponding to each color on the photosensitive drum 131 on the basis of image data, and primarily transfers the toner image to the intermediate transfer belt 125.

A toner image based on image data is primarily transferred to a circumferential surface of the intermediate transfer belt 125 by the plurality of image forming units 3. The intermediate transfer belt 125 is an endless belt-like rotator, and is stretched around a driving roller 125b and a driven roller 127 such that the circumferential surface side abuts on a circumferential surface of each photosensitive drum 131.

The primary transfer roller 126 is provided to primarily transfer the toner images formed on the photosensitive drums 131 to the intermediate transfer belt 125. When the intermediate transfer belt 125 is circularly rotated in the arrow X direction of FIG. 1, the toner images formed on the respective photosensitive drums 131 are sequentially primarily transferred in an overlaid state.

The density sensor (density detector) 136 detects a density of the toner image primarily transferred to the circumferential surface of the intermediate transfer belt 125, and is provided to face the intermediate transfer belt 125 on a downstream side of the image forming units 3M, 3C, 3Y, and 3Bk sequentially primarily transferring the toner images to the intermediate transfer belt 125 and on an upstream side of the nip portion NP.

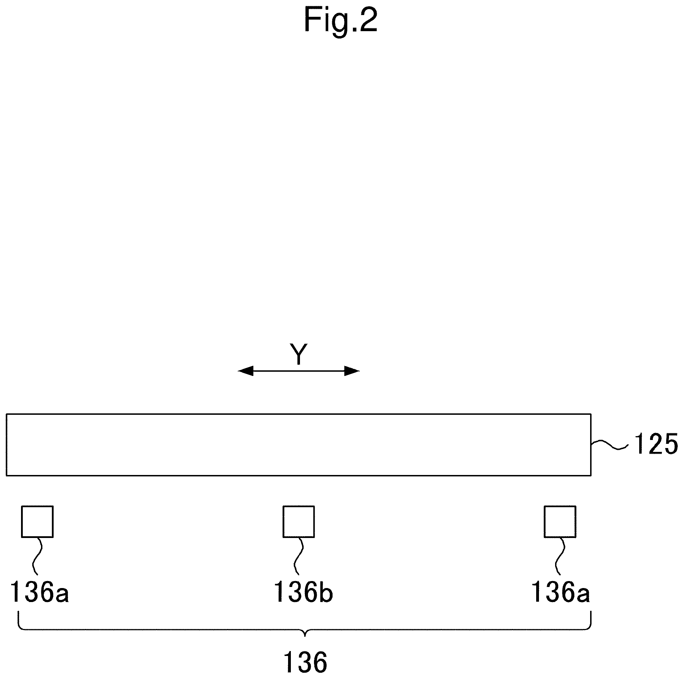

The density sensor 136 is disposed at at least three places of two places at positions close to both end portions of the intermediate transfer belt 125 and one place at a position facing a central portion in a belt width direction perpendicular to a transport direction (arrow X direction) of the intermediate transfer belt 125. FIG. 2 is a diagram simply showing disposition of a density sensor. FIG. 2 is a diagram simply showing disposition when the intermediate transfer belt 125 and the density sensor 136 are viewed from an arrow Z direction of FIG. 1.

In FIG. 2, it is assumed that a right-left direction of the paper surface is a belt width direction (arrow Y). The density sensor 136 is disposed at at least three places at positions facing the intermediate transfer belt 125 on the downstream side of the image forming unit 3Bk, on the upstream side of the nip portion NP, and below the intermediate transfer belt 125 on both end sides (density sensors 136a) in the belt width direction and in the central portion (density sensor 136b) in the belt width direction.

The density sensors 136a detect densities of toner images formed at both ends in the belt width direction in a region (non-transfer region) other than a region where the toner image that is to be secondarily transferred to the sheet P is formed, on the circumferential surface of the intermediate transfer belt 125. The density sensor 136b detects a density of a toner image formed in the central portion in the belt width direction.

The density sensor 136 is configured with, for example, a light emitting element that emits light and a light receiving element that receives reflected light emitted from the light emitting element and reflected. The density sensor 136 is a reflective optical sensor that emits light to the intermediate transfer belt 125 from the light emitting element, receives reflected light (for example, specular reflected light and diffuse reflected light) with the light receiving element, and outputs an electrical signal corresponding to a light quantity of received reflected light. The density sensor 136 measures an optical density of a toner image by emitting light to the toner image formed on the intermediate transfer belt 125 and detecting reflected light. The density sensor 136 converts a measurement result into an electrical signal and outputs the electrical signal to the controller 91 described below. The density sensor 136 may be a sensor capable of detecting a toner image on the intermediate transfer belt 125, and may be a sensor other than the configuration using the light emitting element or the light receiving element described above.

The secondary transfer roller 125a is provided to secondarily transfer the toner image on the intermediate transfer belt 125 to the sheet P fed from the sheet feeding device 24. The secondary transfer roller 125a forms the nip portion NP with the driving roller 125b with the intermediate transfer belt 125 interposed therebetween, and transfers the toner image on the circumferential surface of the intermediate transfer belt 125 to the sheet P passing through the nip portion NP.

The image forming device 12 further includes a belt cleaning device 140 downstream of a secondary transfer position of the intermediate transfer belt 125 in the rotation direction and upstream of a primary transfer position in the rotation direction. The belt cleaning device 140 is provided to remove and clean away toner remaining on the circumferential surface of the intermediate transfer belt 125.

The fixing device 23 performs fixing processing on the toner image on the sheet P transferred with the image forming device 12. The fixing device 23 includes a heating roller including an electric heating element inside and a fixing roller. The sheet P having passed through the nip portion NP is heated and pressed while passing through a nip portion between the heating roller and the fixing roller, and the toner image is fixed on the sheet P. The sheet P on which the fixing processing is completed is discharged to the discharge tray 25 by way of the sheet transport path 251 extending from the fixing device 23.

Next, the image forming unit 3 will be described. The image forming unit 3 has the photosensitive drum 131 disposed at the center to be rotatable in an arrow direction (in FIG. 1, clockwise). Further, a charging device 132, an exposure device 133, a developing device 134, and a cleaning device 135 are disposed in order from a furthest upstream side toward a downstream side of the photosensitive drum 131 in a rotation direction.

In the photosensitive drum 131, the toner image corresponding to each color based on the image data is formed on the circumferential surface through charging processing, exposure processing, developing processing, static elimination processing, and cleaning processing described below.

The charging device 132 has a charging roller that is disposed in contact with the circumferential surface of the photosensitive drum 131. The charging roller rotates in a driven manner with the rotation of the photosensitive drum 131. To the charging roller, a charging bias voltage is applied from a power supply 51 for charging bias described below. With this, the charging roller can charge the circumferential surface of the photosensitive drum 131 to a freely selected potential.

The exposure device 133 emits laser light based on image data to the circumferential surface of the photosensitive drum 131 of which the circumferential surface is charged, and forms an electrostatic latent image on the circumferential surface of the photosensitive drum 131. The exposure device 133 can change an output light quantity (exposure light quantity) of laser light under the control of the controller 91 described below.

The developing device 134 is provided to develop the electrostatic latent image formed on the circumferential surface of the photosensitive drum 131 with toner. To a developing roller of the developing device 134, a developing bias is applied from a power supply 52 for developing bias. The developing roller carries toner in the developing device 134 and causes toner to jump to the circumferential surface of the photosensitive drum 131. The photosensitive drum 131 and the developing roller have a potential difference, and when toner carried on the developing roller is positioned near the photosensitive drum 131, toner from the developing roller is attached to the photosensitive drum 131 due to the potential difference, and the electrostatic latent image is developed.

The cleaning device 135 performs static elimination on the circumferential surface of the photosensitive drum 131 and collects remaining toner after toner on the circumferential surface of the photosensitive drum 131 is transferred to the intermediate transfer belt 125 by the primary transfer roller 126.

The image forming unit 3 has a toner cartridge (not shown) of each color. The toner cartridge stores toner of each color. The toner cartridge can be attached and detached to and from the image forming unit 3, and when the toner cartridge is empty, the toner cartridge is replaced with a new toner cartridge by a user.

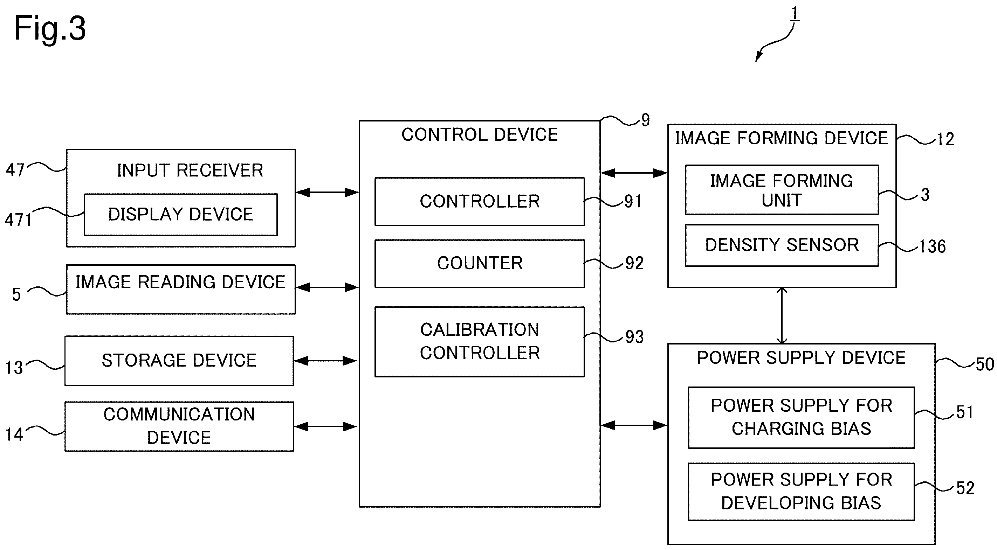

FIG. 3 is a diagram showing an electrical configuration of the image forming apparatus 1 according to the embodiment of the present invention. The same components as those described with reference to FIG. 1 are represented by the same reference numerals, and description will not be repeated. The image forming apparatus 1 includes a control device 9, the input receiver 47, the image reading device 5, the storage device 13, a communication device 14, the image forming device 12, a power supply device 50, and the like.

The input receiver 47 includes hard keys such as an enter key for confirming various operations or an operation to confirm settings and a start key, and a display device 471. The display device 471 is made of a liquid crystal display (LCD), an organic EL (Organic Light-Emitting Diode (OLED)) display, or the like, and displays an operation screen, a message, or the like. The display device 471 may be configured integrally with a touch panel.

The image reading device 5 includes a scanner or the like, and reads an image of a document to acquire image data. The image forming device 12 prints an image on a sheet according to a print job.

The storage device 13 is a large capacity storage device made of a solid state drive (SSD) or a hard disk drive (HDD) that stores image data, various programs, a data table, and the like. The communication device 14 is a communication module that exchanges various kinds of data such as receiving a print job from an external apparatus via a network such as the Internet.

The control device 9 is configured with a processor, a random access memory (RAM), a read only memory (ROM), and the like. The processor is a central processing unit (CPU), a micro processing unit (MPU), an application specific integrated circuit (ASIC), or the like. The control device 9 functions as a controller 91, a counter 92, and a calibration controller 93 by the processor executing a control program stored in the ROM or the like. The controller 91 administrates overall operation control of the image forming apparatus 1.

The counter 92 (a number-of-sheets-continuously-printed counter) counts the number of sheets continuously printed and a continuous printing time while the image forming device 12 is executing a print job. The calibration controller 93 executes calibration for color adjustment on the image forming device 12. The calibration in the present embodiment will be described below in detail.

The power supply device 50 has the power supply 51 for charging bias and the power supply 52 for developing bias. The power supply 51 for charging bias is a power supply circuit that applies the charging bias voltage to the charging roller of the charging device 132 under the control of the control device 9. The power supply 52 for developing bias is a power supply circuit that applies the developing bias voltage to the developing roller of the developing device 134 under the control of the control device 9.

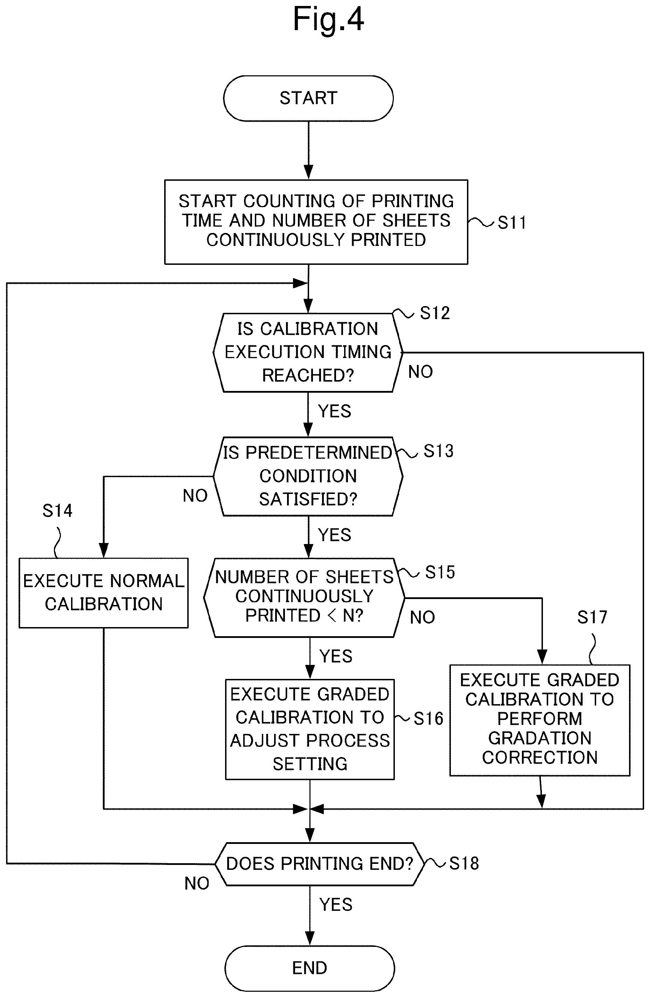

FIG. 4 is a flowchart illustrating a flow of printing processing in the present embodiment. First, when the controller 91 causes the image forming device 12 to execute printing according to a print job, the counter 92 starts counting of the number of printed sheets and a printing time (S11).

Then, the calibration controller 93 determines whether an execution timing of calibration is reached, for example, by determining whether the number of printed sheets from execution of previous calibration reaches a predetermined first value (for example, 100 sheets) on the basis of a count value by the counter 92 (S12). When the calibration controller 93 determines that the number of sheets continuously printed does not reach the above-described first value, and the execution timing of the calibration is not reached (S12; NO), the process proceeds to S18.

On the other hand, when the calibration controller 93 determines that the number of sheets continuously printed reaches the above-described first value, and the execution timing of the calibration is reached (S12; YES), the calibration controller 93 determines whether an operation state of the image forming device 12 satisfies a predetermined condition (S13). The predetermined condition is that at least one of a continuous printing time from when the image forming device 12 starts the print job, the number of sheets continuously printed, and an amount of change in toner charge amount reaches a predetermined value. When determination is made that the predetermined condition is not satisfied (S13; NO), the calibration controller 93 executes normal calibration (S14). Hereinafter, the calibration that is executed in the processing S14 is denoted as normal calibration, and calibration that is executed in processing S16 and processing S17 described below is denoted as graded calibration.

For example, before factory shipment, a fluctuation of a toner density of a toner image formed in the central portion in the belt width direction during continuous printing is measured, respective values of a continuous printing time, the number of sheets continuously printed, an amount of change in toner charge amount when a fluctuation of the toner density as having an influence on image quality occurs are detected, and these values are stored in a memory (not shown) of the calibration controller 93. The fluctuation of the toner density as having an influence on image quality refers to a state in which a fluctuation width of the toner density for every given number of printed sheets is a predetermined abnormal value when the toner density is acquired for every given number of printed sheets during continuous printing. When determining whether the predetermined condition is satisfied, the calibration controller 93 may use these three items for determination or may perform determination through comparison of at least one item.

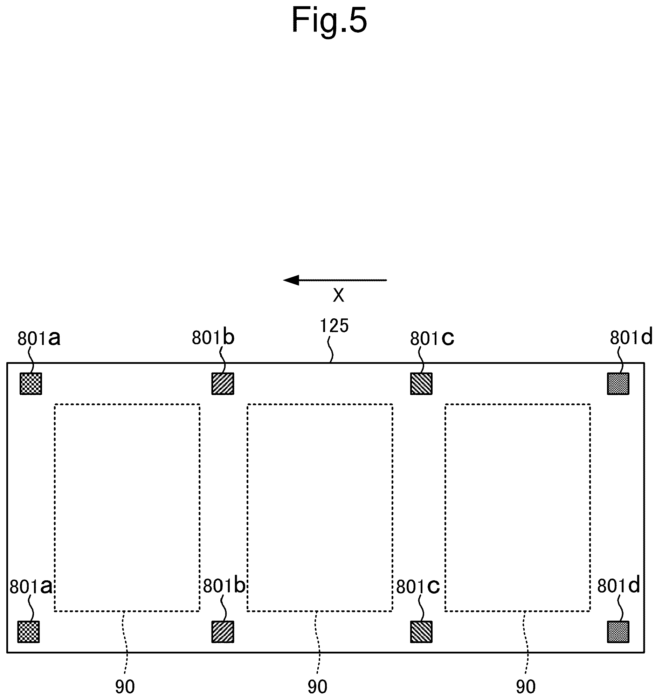

Subsequently, the normal calibration will be described. FIG. 5 is a diagram showing an example of patch images that are formed when the normal calibration is executed. In FIG. 5, patch images 801a, 801b, 801c, and 801d are patch images for respective colors, and for example, the patch image 801a is an image for black, the patch image 801b is an image for yellow, the patch image 801c is an image for cyan, and the patch image 801d is an image for magenta.

A transfer region 90 indicated by a dotted line is a region where a tone image for secondary transfer to the sheet P is to be formed, and a region other than the transfer region 90 is set as a non-transfer region. In executing the normal calibration, the calibration controller 93 causes the image forming device 12 to form patch images for the same color at two places on both end sides in the belt width direction in the non-transfer region while performing normal image formation. The image forming device 12 shifts a position in the transport direction to form patch images for four colors on both end sides in the belt width direction. The density sensor 136 detects densities of the patch images. The calibration controller 93 acquires the density of each patch image from the density sensor 136 and executes calibration for the image forming unit 3 of each color. In the calibration, the controller 91 performs density correction, gradation correction, or the like on the basis of the density or the like of the patch image using an existing method. As shown in FIG. 5, when a plurality of patch images for the same color are formed, and the density of each patch image is acquired from the density sensor 136, the controller 91 performs calibration using an average value of the densities of the respective patch images.

When determination is made that the predetermined condition is satisfied (S13; YES), the calibration controller 93 determines whether the number of sheets continuously printed is smaller than the stored number of sheets continuously printed N (S15). When determination is made that the number of sheets continuously printed is less than the number of sheets continuously printed N (S15; YES), the calibration controller 93 executes graded calibration to adjust a process setting of the image forming device 12 (S16). When determination is made that the number of sheets continuously printed is equal to or greater than the number of sheets continuously printed N (S15; NO), the calibration controller 93 executes graded calibration to perform gradation correction for image formation by the image forming device 12 (S17).

In the calibration of S16 and S17, the calibration controller 93 performs the graded calibration also using a toner density characteristic in the central portion by causing the image forming device 12 to form a patch image in the central portion in the belt width direction as well as on both end sides in the belt width direction.

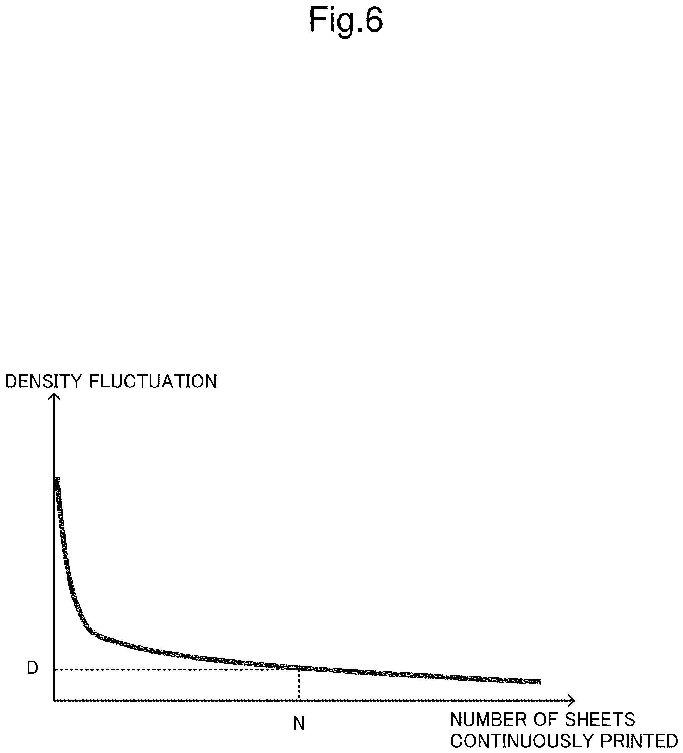

Here, the number of sheets continuously printed N will be described. FIG. 6 is a graph showing a relationship between the number of sheets continuously printed and a density fluctuation. Immediately after printing starts (when the number of sheets continuously printed is small), because a surface potential of the photosensitive drum 131, a potential of the developing roller of the developing device 134, or the like is not stable, a density fluctuation of a toner image tends to become large. On the other hand, when a predetermined time has elapsed after printing starts (when the number of sheets continuously printed increases), the surface potential of the photosensitive drum 131 or the potential of the developing roller is stable, and a density fluctuation is reduced. That is, a density fluctuation immediately after printing starts is often caused by instability of the image forming process of the image forming device 12.

Accordingly, immediately after printing starts (when the number of sheets continuously printed is small), it is effective to perform calibration to adjust the process setting of the image forming device 12. On the other hand, when the predetermined time has elapsed after printing starts (when the number of sheets continuously printed increases), because the image forming process is stable and a density fluctuation is reduced, it is effective to perform the calibration by gradation correction without performing the adjustment of the process setting.

A determination condition (the number of sheets continuously printed N) for determining whether to perform the adjustment of the process setting or the gradation correction is determined as follows. In FIG. 6, a density fluctuation when an influence on image quality becomes a predetermined allowable level is set to a value D. Then, before factory shipment of the image forming apparatus 1, a characteristic of a density fluctuation during continuous printing of the image forming apparatus 1 is measured, and the number of sheets continuously printed N when the density fluctuation reaches the value D is determined. The calibration controller 93 stores the number of sheets continuously printed N in a memory (not shown) in advance.

Here, the process setting of the image forming device 12 is setting of items involved in the image forming process such as the charging bias voltage in the charging device 132, the developing bias voltage in the developing device 134, and the light quantity of laser light emitted from the exposure device 133. The graded calibration by the adjustment of the process setting that is executed by the calibration controller 93 performs color adjustment of the toner image by adjusting these items.

When determination is made that the number of sheets continuously printed is less than the number of sheets continuously printed N (S15; YES), the calibration controller 93 performs the process setting without gradation correction (S16), and accordingly, a necessary type of calibration is effectively performed according to the operation state in the image forming device 12. In this situation, by performing only calibration for a necessary process setting, it is possible to reduce a processing load of the control device 9 and to execute calibration without degrading productivity, compared to when both the adjustment of the process setting and the gradation correction are performed.

When the calibration controller 93 determines that the number of sheets continuously printed is equal to or greater than the number of sheets continuously printed N (S15; NO), as described with reference to FIG. 6, because the image forming process of the image forming device 12 is stable and the density fluctuation becomes small, the calibration controller 93 executes the graded calibration to perform the gradation correction without performing the adjustment of the process setting of the image forming device 12 (S17). For this reason, also in this case, a necessary type of calibration is effectively performed according to the operation state in the image forming device 12. In this situation, by performing only calibration for necessary gradation correction, it is possible to reduce the processing load of the control device 9 and execute calibration without degrading productivity, compared to when both the adjustment of the process setting and the gradation correction are performed. For the calibration by the gradation correction, an existing method is used and detailed description will be omitted. For example, the calibration controller 93 execute calibration by performing correction of a look-up table (input/output characteristics) indicating a gamma characteristic for each color to be stored.

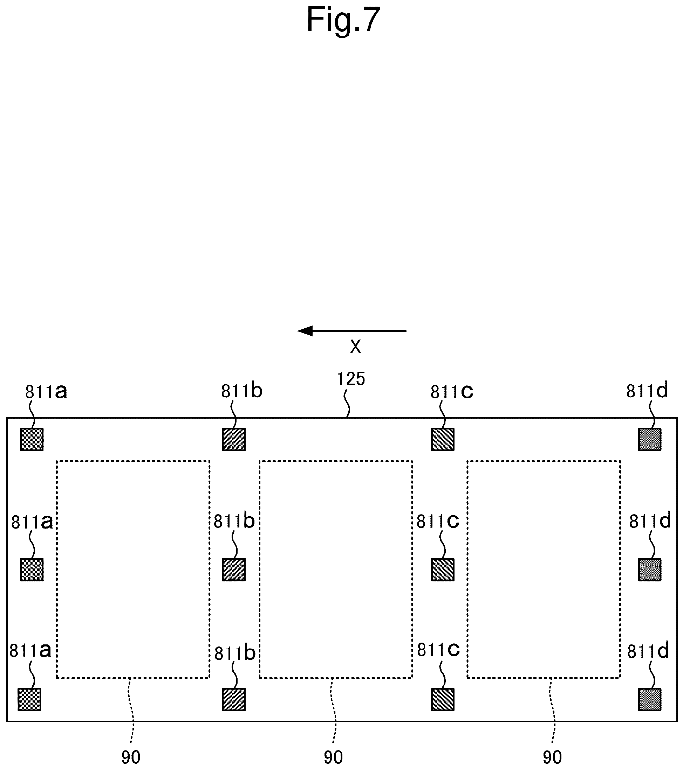

FIG. 7 is a diagram showing an example of forming positions of patch images when graded calibration is executed. In FIG. 7, patch images 811a, 811b, 811c, and 811d are patch images for respective colors, and for example, the patch image 811a is an image for black, the patch image 811b is an image for yellow, the patch image 811c is an image for cyan, and the patch image 811d is an image for magenta.

During the execution of the graded calibration, the calibration controller 93 causes the image forming device 12 to form patch images for the same color at at least three places of both end sides and in the central portion in the belt width direction on a line along the belt width direction that are positions corresponding to the sheet interval of the non-transfer region between the transfer regions 90, and to form patch images making color different for each sheet interval. An interval (inter-sheet distance) of the transfer regions 90 is the same between when patch images are formed and when patch images are not formed. As shown in FIG. 7, when a plurality of patch images for the same color are formed and the density of each patch image is acquired from the density sensor 136, the controller 91 performs calibration using an average value of the densities of the respective patch images.

A difference between the patch images for the normal calibration shown in FIG. 5 and the patch images for the graded calibration shown in FIG. 7 is whether a patch image is formed in the central portion in the belt width direction. A reason that the patch image is formed in the central portion of the belt width direction during the graded calibration is because a distribution may occur in a toner transport amount in the width direction (belt width direction) of the developing device 134 during continuous printing, and a difference in density of a toner image may be generated in the belt width direction of the photosensitive drum 131.

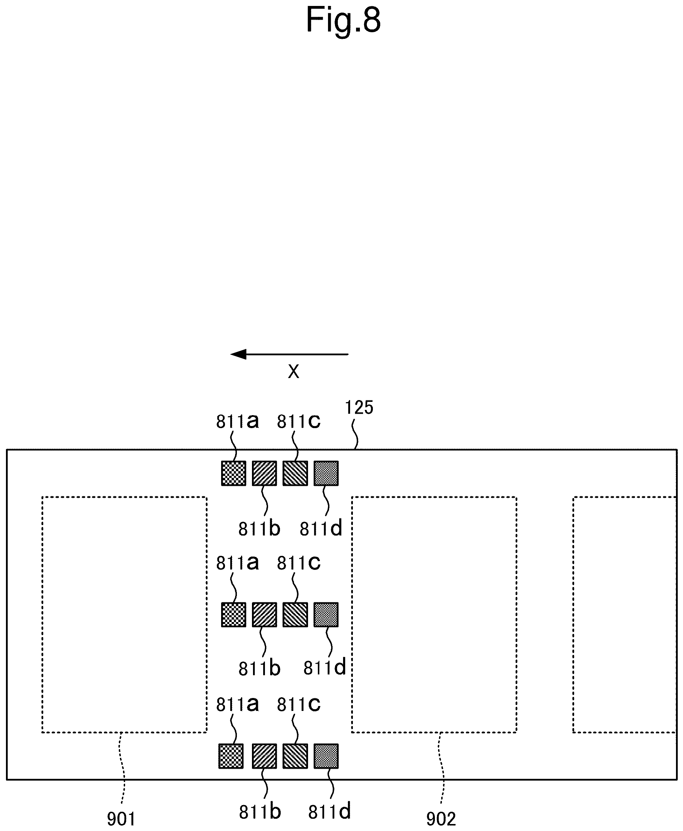

FIG. 8 is a diagram showing another example of forming positions of patch images when graded calibration is executed. The calibration controller 93 causes the image forming device 12 to form patch images 811a for the same color at at least three places on both end sides and in the central portion in the belt width direction on a line along the belt width direction in a non-transfer region (a region corresponding to a sheet interval) between the transfer regions 90, and to subsequently form patch images 811b, 811c, and 811d for different colors next in the belt width direction. That is, the image forming device 12 forms patch images for four colors between continuous transfer region 901 and transfer region 902 at a time. In this case, the image forming device 12 widens the sheet interval than normal and forms the patch images for the four colors. As shown in FIG. 8, when a plurality of patch images for the respective colors are formed in the sheet interval, the density of each patch image for each color is acquired by the density sensor 136 at this moment, and the controller 91 performs calibration for each imaging forming unit using an average value of the densities of the respective patch images for each color.

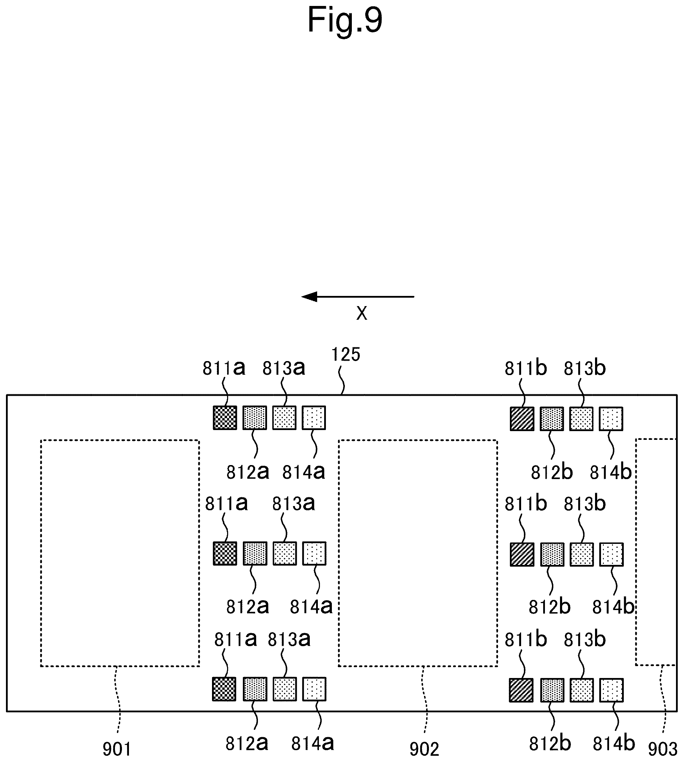

FIG. 9 is a diagram showing another example of forming positions of patch images when graded calibration is executed. The calibration controller 93 causes the image forming device 12 to form the patch images 811a for the same color with the same density (for example, a density 100%) at at least three places of both end sides and the central portion in the belt width direction on a line along the belt width direction in a non-transfer region (a region corresponding to a sheet interval) between a transfer region 901 and a transfer region 902.

A patch image 812a that has the same color as the patch image 811a and has a density (for example, a density 75%) lower than the patch image 811a is formed next in the belt width direction, a patch image 813a that has the same color as the patch image 812a and has a density (for example, a density 50%) lower than the patch image 812a is formed next in the belt width direction, and a patch image 814a that has the same color as the patch image 813a and has a density (for example, a density 25%) lower than the patch image 813a is formed next in the belt width direction. In this case, the image forming device 12 widens the interval (sheet interval) between the transfer region 901 and the transfer region 902 than normal and forms the patch images for the same color with different densities.

In addition, the calibration controller 93 causes the image forming device 12 to form path images for color different from the patch images formed between the transfer region 901 and the transfer region 902, in a non-transfer region between the transfer region 902 and a transfer region 903 while making the density different. In this case, the image forming device 12 widens the interval (sheet interval) of the transfer regions and forms the patch images for the respective colors with different densities in different sheet intervals.

As shown in FIG. 9, when a plurality of patch images that are the patch images for the same color and have different densities are formed in the above-described sheet interval, the density of each of the patch images that are the patch images for the same color and have different densities is acquired by the density sensor 136 at this moment, and the controller 91 performs calibration for each image forming unit 3 using the densities of the patch images that are the patch images for the same color and have different densities. In this case, the density of each of the patch images for each color having different densities is acquired by the density sensor 136 at this moment, and the controller 91 performs calibration for each image forming unit using an average value of the densities (the densities acquired from the density sensor 136) of a plurality of patch images for the same color with the same density (a set density used for forming a patch image) among the patch images for the respective colors.

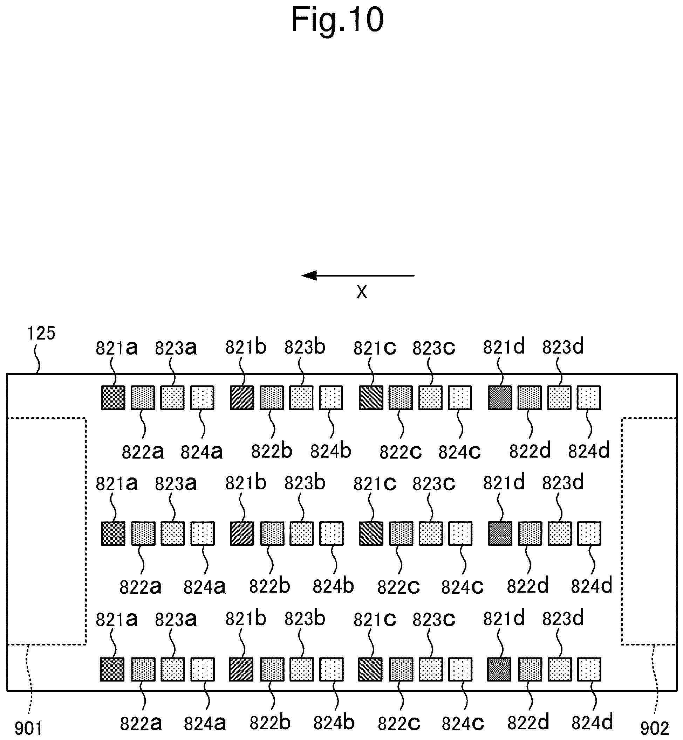

FIG. 10 is a diagram showing another example of forming positions of patch images when calibration is executed. The calibration controller 93 causes the image forming device 12 to form patch images for all colors (four colors) with different densities in a non-transfer region (a region corresponding to a sheet interval) between a transfer region 901 and a transfer region 902.

When the calibration controller 93 performs graded calibration by gradation correction, as shown in FIG. 9 or 10, the image forming device 12 is caused to form patch images for the respective colors with different densities in the region corresponding to the sheet interval. As shown in FIG. 10, when a plurality of patch images for the respective colors are formed in the above-described sheet interval, the density of each of the patch images for the respective colors is acquired by the density sensor 136 at this moment, and the controller 91 performs calibration for each image forming unit using an average value of the densities (the densities acquired from the density sensor 136) of a plurality of patch images for the same colors with the same density (a set density used for forming a patch image) among the patch images for the respective colors.

The description will return to FIG. 4. After the processing of S14, S16, and S17, when the controller 91 determines that printing does not yet end (S18; NO), the process proceeds to S12. When the controller 91 determines that printing ends (S18; YES), the process ends.

As described above, by measuring the characteristic of the density fluctuation during continuous printing of the image forming apparatus 1 at the time of factory shipment, determining and storing the number of sheets continuously printed N when the density fluctuation reaches the value D, when the number of sheets continuously printed is smaller than the number of sheets continuously printed N, performing the graded calibration to adjust the process setting, and when the number of sheets continuously printed is greater than the number of sheets continuously printed N, performing the graded calibration to perform the gradation correction, execution of a comparatively less necessary type of calibration is omitted while execution of a necessary type of calibration with the lapse of continuous printing is secured. As a result, it is possible to perform effective calibration without degrading the productivity of the image forming apparatus during continuous printing.

Incidentally, in the case of a general electrophotographic image forming apparatus, printing is performed in such a manner that laser light according to image data is emitted to a charged image carrier to form an electrostatic latent image, subsequently, a toner image is formed by supplying toner, and the toner image is transferred to a sheet. Specifically, preparation for electrostatic latent image forming is performed by a charging device charging a surface of the image carrier to a predetermined potential (charging bias), and the electrostatic latent image is formed by an exposure device emitting laser light. Then, by supplying toner charged to a predetermined potential (developing bias) from the developing device to the image carrier, the electrostatic latent image becomes a toner image and is visualized.

When an image forming apparatus that performs printing according to such an image forming process performs continuous printing, the charging bias or the developing bias is not stable until a predetermined number of sheets continuously printed after printing starts, and a density fluctuation is likely to occur. However, when calibration is frequently performed during continuous printing, a lot of time is required until printing ends, resulting in reduction in productivity.

The present embodiment has been made in view of the concerned situation, and effectively performs calibration during continuous printing without causing deterioration in productivity.

The present invention is not limited to the configuration of the above-described embodiment, and various modifications can be made. The configuration and the processing described in the above-described embodiment with reference to FIGS. 1 to 6 are merely one embodiment of the present invention, and are not intended to limit the present invention to the configuration and the processing.

## Claims

1. An image forming apparatus (1) comprising:
an image forming device (12) that has an image carrier (131), a charging device (132) configured to charge the image carrier (131), an exposure device (133) configured to expose the charged image carrier (131) on the basis of image data to form an electrostatic latent image, a developing device (134) configured to supply toner to the exposed image carrier (131) to form a toner image, a primary transfer device (126) configured to transfer the toner image from the image carrier (131) to a surface of an intermediate transfer belt (125), and a secondary transfer device (125a) configured to secondarily transfer, to a sheet, the toner image primarily transferred to the surface of the intermediate transfer belt (125), and is configured to print an image on the sheet according to a print job;
a number-of-sheets-continuously-printed counter (92) configured to count the number of sheets continuously printed by the image forming device (12);
a density detector (136) configured to measure a density of the toner image primarily transferred to the intermediate transfer belt (125); and
a calibration controller (93) configured to execute calibration,
wherein the calibration controller (93) is configured to
cause the image forming device (12) to form a patch image for the calibration and acquire a density of the patch image from the density detector (136) when a predetermined condition is satisfied at an execution timing time-point of the calibration during execution of the print job, and
perform calibration to adjust a process setting when the image forming device (12) forms the toner image on the image carrier (131), using the acquired density of the patch image when the counted number of sheets of the number-of-sheets-continuously-printed counter (92) is less than a predetermined number of sheets, and perform graded calibration to perform gradation correction when the counted number of sheets is equal to or greater than the predetermined number of sheets.

2. The image forming apparatus (1) according to claim 1,
wherein the predetermined number of sheets is a predetermined number of sheets continuously printed such that a density fluctuation of toner images formed on the sheet through continuous printing by the image forming device (12) is within a predetermined allowable range.

3. The image forming apparatus (1) according to claim 1,
wherein the calibration controller (93) is configured to cause, when the predetermined condition is satisfied at the execution timing time-point of the calibration during the execution of the print job, the image forming device (12) to form the patch image on both end sides and a central portion in a belt width direction perpendicular to a transport direction of the intermediate transfer belt of a region on the intermediate transfer belt corresponding to a sheet interval in a region other than a transfer region where the toner image primarily transferred to the sheet is formed.

4. The image forming apparatus (1) according to claim 1,
wherein the predetermined condition is that at least one of a continuous printing time of the image forming device (12), the number of sheets continuously printed, or an amount of change in toner charge amount reaches a predetermined value.

5. The image forming apparatus (1) according to claim 1,
wherein the process setting is a numerical value setting involved in an image forming process when the image forming device (12) forms the toner image, and is a value of a charging bias voltage in the charging device (132), a value of a developing bias voltage in the developing device (134), or a light quantity of laser light emitted from the exposure device (133).

6. The image forming apparatus (1) according to claim 1,
wherein the calibration controller (93) is configured to perform, when a plurality of patch images for the same color are formed, and a density of each of the plurality of patch images for the same color is acquired by the density detector (136), the graded calibration using an average value obtained by averaging the densities of the plurality of respective patch images for the same color.
